# DEMANDE DE BREVET EUROPEEN

(11) **EP 3 915 660 A1**
(43) Date de publication de la demande: **01.12.2021**
(21) Numéro de dépôt: 20315269.9
(22) Date de dépôt: 28.05.2020
(51) Int. Cl.: B01D 21/00, B01D 21/24

(54) **SYSTEME ET PROCEDE DE RECIRCULATION POUR UN DECANTEUR, NOTAMMENT UN CLARIFICATEUR D'UNE STATION D'EPURATION**

(71) Demandeur: Clarif-Concept, 34750 Villeneuve-les-Maguelone (FR)
(72) Inventeur: Galichet, Gilles, Constant, Auguste, 34750 Villeneuve-les-Maguelone (FR)
(74) Mandataire: Delaveau, Sophie

(57) **Abrégé**

L'invention porte principalement sur un système (1) d'accélération de la décantation dans un décanteur (2) par recirculation des particules fines à sédimentation lente au moyen de l'effet Venturi provoqué par des déflecteurs coaxiaux (14, 14', 15, 24) favorisant l'agglomération des particules dans des courants laminaires (F1 - F4) les mettant en contact avec les boues (3) du courant principal (C1) entrant dans le système (1), lesquelles sont entraînées par les contre-courants centripètes (C3) générés au sein du décanteur (2) vers le fond (7) de ce dernier.

## Description

L'invention s'inscrit dans le domaine du traitements des effluents, généralement des eaux usées, notamment dans des stations d'épuration.

La présente invention a pour objet de fournir un système permettant la recirculation des effluents au sein d'un décanteur, notamment un clarificateur d'une station d'épuration, et optimisant la décantation des boues dans le décanteur, lesquelles boues sont des sédiments en suspension dans les effluents considérés.

Un clarificateur d'une station d'épuration est le dernier élément de traitement des effluents avant le relargage dans la nature des eaux traitées et clarifiées. Le clarificateur reçoit en amont des effluents provenant d'un bassin d'activation et prétraités par des bactéries d'activation. Ces effluents prétraités, en arrivant dans le clarificateur, sont chargés en bactéries d'activation qui ont digéré les dernières matières organiques en suspension, et qui ont précipité pour former les boues d'activation. Le clarificateur a donc pour rôle de séparer les boues d'activation et de clarifier l'eau qui sera relarguée par surverse dans la nature.

De manière connue, un clarificateur est un bassin de forme globalement circulaire comprenant une paroi de fond tronconique pouvant être inclinée vers le centre dudit clarificateur, et un puits technique central s'étendant depuis le fond du clarificateur vers la surface de ce dernier. Ce puits technique comprend une amenée d'effluents activés ménagée sous et à proximité de la surface du clarificateur. Dans le cas d'un clarificateur du type racleur, ce dernier comprend en outre un pont-racleur qui balaie périodiquement le fond pour amener les boues sédimentées au fond vers une sortie de récupération des boues activées. Enfin, le clarificateur comprend un déversoir pour permettre la surverse de l'eau clarifiée.

Pour faciliter la clarification des effluents et éviter le relargage de polluants dans la nature, il est nécessaire que l'agglomération des boues soit efficace et que le temps de séjour des effluents dans le clarificateur ne soit pas trop long afin d'éviter la lyse des bactéries présentes dans les boues d'activation, ce qui induirait un relargage des pollutions captées par ces bactéries.

Il est connu des dispositifs communément nommés « Clifford », consistant en une jupe ménagée autour du puits technique au niveau de l'amenée d'effluents activés. Cette jupe a pour rôle d'orienter le flux d'effluents vers le fond du clarificateur.

Cependant, ces dispositifs ne permettent pas d'éviter la formation de boues surnageantes, qui de fait risquent de se déverser dans la nature.

Il est également connu du brevet européen EP 2296774 un clarificateur comprenant des moyens de guidage des boues constitués de plusieurs jupes coaxiales ménagées autour du puits technique, et qui permettent de mettre en contact des courants de recirculation centripètes avec des courants de sortie centrifuges pour faciliter l'agglomération des boues.

Cependant, cette solution peut générer des turbulences dans le clarificateur, ce qui risque de s'opposer à l'agglomération des boues. D'autres part ces recirculations, bien qu'améliorant le problème énoncé ci-dessus, n'élimine pas totalement la présence des boues surnageantes.

Pour pallier les différents inconvénients évoqués plus haut, l'invention a pour objet de proposer un système de recirculation des effluents optimisant l'agglomération et la décantation des boues au sein d'un décanteur.

À cet effet, l'invention vise un système de recirculation pour un décanteur, lequel décanteur comprend un bassin et des moyens d'amenée dans le bassin d'effluents chargés de boues en suspension, lesquels moyens d'amenée comprennent une sortie d'effluents sous et à proximité de la surface du bassin, lequel système de recirculation comprend ;
- Des moyens de guidage orienté du courant d'effluents chargés de boues depuis la sortie des moyens d'amenée en direction du fond du bassin ;
- Des moyens de concentration du courant orienté d'effluents ménagés en sortie des moyens de guidage pour générer un flux laminaire d'effluents ;
- Des premiers moyens d'accélération du flux laminaire qui sont adjacents à une sortie des moyens de concentration, et
- Des moyens de déflection du flux accéléré vers la surface du bassin du décanteur pour générer un flux défléchi.

Le système de recirculation peut également comporter les caractéristiques optionnelles suivantes considérées isolément ou selon toutes les combinaisons techniques possibles :
- Les moyens de concentration comprennent une jupe tronconique interne adaptée pour être agencée autour des moyens d'amenée d'effluents et une jupe tronconique externe solidaire des moyens de guidage, lesquelles jupes interne et externe ménagent un espace de concentration annulaire présentant en section radiale une forme tronconique qui s'étend de manière convergente vers la sortie desdits moyens de concentration.
- Les premiers moyens d'accélération comprennent une première jupe tronconique adaptée pour être agencée autour des moyens d'amenée d'effluents, laquelle première jupe tronconique est disposée en sortie des moyens de concentration en ménageant un premier espace annulaire qui est délimité par ladite première jupe tronconique et la jupe tronconique interne des moyens de concentration, lequel premier espace annulaire présente en section radiale une forme convergente jusqu'à une première ouverture annulaire.
- Les moyens de déflection comprennent la première jupe tronconique qui s'étend de manière divergente en direction de la surface du bassin du décanteur pour défléchir le flux accéléré vers ladite surface.
- Le système comprend des deuxièmes moyens d'accélération du flux accéléré ménagés entre les premiers moyens d'accélération et les moyens de déflection pour générer un flux secondairement accéléré.
- Les seconds moyens d'accélération comprennent une seconde jupe tronconique qui est adaptée pour être agencée autour des moyens d'amenée d'effluents et disposée à distance de la première jupe tronconique en ménageant un second espace annulaire qui est délimité par la première jupe tronconique et la seconde jupe tronconique et qui présente en section radiale une forme convergente jusqu'à une seconde ouverture annulaire.
- La première jupe tronconique s'étend de manière divergente en direction du fond du bassin du décanteur, et les moyens de déflection du flux laminaire comprennent la seconde jupe tronconique qui s'étend de manière divergente en direction de la surface du bassin pour défléchir le flux secondairement accéléré vers ladite surface.
- Les moyens de concentration présentent en section transversale une forme de tronc de cône qui s'étend de manière divergente depuis leur sortie.
- Les moyens de guidage comprennent un corps de forme tronconique s'étendant de manière divergente depuis les moyens de concentration.
- Les moyens de guidage comprennent un corps de forme cylindrique s'étendant depuis les moyens de concentration.

L'invention vise également un décanteur du type clarificateur pour une station d'épuration comprenant un bassin de stockage d'effluents chargés de boues, notamment de boues d'épuration activées, comprenant des moyens d'amenée d'effluents comportant une sortie d'effluents sous et à proximité de la surface du bassin, lequel décanteur comprend en outre un système de recirculation ménagé autour des moyens d'amenée et comprenant :
- Des moyens de guidage orienté du courant d'effluents chargés de boues depuis la sortie des moyens d'amenée en direction du fond du bassin ;
- Des moyens de concentration du courant orienté d'effluents ménagés en sortie des moyens de guidage pour générer un flux laminaire d'effluents ;
- Des premiers moyens d'accélération du flux laminaire qui sont adjacents à une sortie des moyens de concentration, et
- Des moyens de déflection du flux accéléré vers la surface du bassin du décanteur pour générer un flux défléchi.

Le décanteur peut également comporter les caractéristiques optionnelles suivantes considérées isolément ou selon toutes les combinaisons techniques possibles :
- Les moyens d'amenée d'effluents forment une colonne s'étendant perpendiculairement depuis le fond du bassin et comprenant au niveau d'une portion d'extrémité libre la sortie d'effluents ménagée sous et à proximité de la surface du bassin, la sortie d'effluents comprend une bouche de forme annulaire pour évacuer les effluents dans toutes les directions, et la colonne d'amenée et le système de recirculation sont coaxiaux, la sortie d'effluents comprend une pluralité d'éléments de renfort uniformément répartis, et chaque élément de renfort s'étend en travers de la bouche parallèlement à la colonne d'amenée d'effluents.
- La sortie d'effluents comprend quatre éléments de renfort.
- Les moyens de concentration comprennent une jupe tronconique interne adaptée pour être agencée autour des moyens d'amenée d'effluents et une jupe tronconique externe solidaire des moyens de guidage, lesquelles jupes interne et externe ménagent un espace de concentration annulaire présentant en section radiale une forme tronconique qui s'étend de manière convergente vers la sortie desdits moyens de concentration.
- Les premiers moyens d'accélération comprennent une première jupe tronconique adaptée pour être agencée autour des moyens d'amenée d'effluents, laquelle première jupe tronconique est disposée en sortie des moyens de concentration en ménageant un premier espace annulaire qui est délimité par ladite première jupe tronconique et la jupe tronconique interne des moyens de concentration, lequel premier espace annulaire présente en section radiale une forme convergente jusqu'à une première ouverture annulaire.
- Les moyens de déflection comprennent la première jupe tronconique qui s'étend de manière divergente en direction de la surface du bassin du décanteur pour défléchir le flux accéléré vers ladite surface.
- Le système comprend des deuxièmes moyens d'accélération du flux accéléré ménagés entre les premiers moyens d'accélération et les moyens de déflection pour générer un flux secondairement accéléré.
- Les seconds moyens d'accélération comprennent une seconde jupe tronconique qui est adaptée pour être agencée autour des moyens d'amenée d'effluents et disposée à distance de la première jupe tronconique en ménageant un second espace annulaire qui est délimité par la première jupe tronconique et la seconde jupe tronconique et qui présente en section radiale une forme convergente jusqu'à une seconde ouverture annulaire.
- La première jupe tronconique s'étend de manière divergente en direction du fond du bassin du décanteur, et les moyens de déflection du flux laminaire comprennent la seconde jupe tronconique qui s'étend de manière divergente en direction de la surface du bassin pour défléchir le flux secondairement accéléré vers ladite surface.
- Les moyens de concentration présentent en section transversale une forme de tronc de cône qui s'étend de manière divergente depuis leur sortie.
- Les moyens de guidage comprennent un corps de forme tronconique s'étendant de manière divergente depuis les moyens de concentration.
- Les moyens de guidage comprennent un corps de forme cylindrique s'étendant depuis les moyens de concentration.

L'invention vise enfin un procédé de recirculation d'effluents chargés de boues dans un décanteur, notamment un clarificateur pour une station d'épuration, comprenant un bassin de stockage d'effluents chargés de boues, des moyens d'amenée d'effluents comportant une sortie d'effluents sous et à proximité de la surface du bassin, lequel décanteur comprend en outre un système de recirculation ménagé autour des moyens d'amenée et comprenant des moyens de guidage orienté du courant d'effluents chargés de boues depuis la sortie des moyens d'amenée en direction du fond du bassin, des moyens de concentration du courant orienté d'effluents ménagés en sortie des moyens de guidage pour générer un flux laminaire d'effluents, des premiers moyens d'accélération du flux laminaire qui sont adjacents à une sortie des moyens de concentration, et des moyens de déflection du flux accéléré vers la surface du bassin du décanteur, lequel procédé comprend les étapes successives de :
- Guidage orienté du courant d'effluents depuis la sortie des moyens d'amenée en direction du fond du bassin ;
- Génération d'un flux laminaire d'effluents par concentration du courant orienté d'effluents en sortie des moyens de concentration ;
- Première accélération du flux laminaire en sortie des moyens de concentration, et
- Déflection du flux laminaire accéléré vers la surface du bassin pour générer un flux défléchi.

Le procédé de recirculation peut également comporter les caractéristiques optionnelles suivantes considérées isolément ou selon toutes les combinaisons techniques possibles :
- Le procédé comprend une étape de seconde accélération du flux laminaire accéléré pour générer un flux secondairement accéléré préalablement à sa déflection vers la surface du bassin.

D'autres caractéristiques et avantages de l'invention ressortiront clairement de la description qui en est donnée ci-dessous, à titre indicatif et nullement limitatif, en référence aux figures annexées :
la figure 1 représente une vue en coupe radiale d'un clarificateur comprenant sur la partie gauche de la figure un premier mode de réalisation d'un système de recirculation selon l'invention, et sur la partie droite un second mode de réalisation du système de recirculation selon l'invention ;
la figure 2 représente une vue en coupe radiale d'un clarificateur comprenant sur la partie gauche de la figure une variante du premier mode de réalisation du système de recirculation de la figure 1, et sur la partie droite une variante du second mode de réalisation du système de recirculation de la figure 1 ;
la figure 3 représente un détail de la figure 1 illustrant le système de recirculation selon les premier et second mode de réalisation ;
la figure 4 représente une vue en perspective et en coupe radiale du système de recirculation selon le second mode de réalisation de la figure 1.

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement deux modes de réalisation de l'objet de l'invention mais qu'il peut exister d'autres modes de réalisation qui répondent à la définition de l'invention.

L'invention concerne le domaine du traitement des effluents qui comprennent des sédiments en suspension appelés communément boues. En particulier, l'invention sera présentée dans le cadre du traitement des eaux usées dans les stations d'épuration.

Les stations d'épuration comprennent une succession de moyens de traitement visant à traiter les eaux usées provenant des égouts pour permettre leur relargage dans la nature.

De manière connue, un procédé de traitement des eaux usées est réalisé au sein d'une station d'épuration selon des étapes successives de dégrillage pour supprimer la plupart des déchets solides, de tamisage pour des déchets solides plus petits, de dessablage et de déshuilage, de décantation lamellaire pour éliminer les dernières particules en suspension, d'aération dans un aérateur et enfin de clarification dans un ou plusieurs clarificateurs 2.

Dans l'aérateur, des bactéries aérobies dites d'activation dégradent les matières organiques présentes dans l'eau en cours de traitement. Ces matières organiques dégradées sont transformée en boues activées 3.

A la fin de la ligne de traitement des eaux usées, le ou les clarificateurs 2 reçoivent de l'aérateur l'eau comprenant ces boues activées 3. Dans la suite de la description, on appellera « effluents activés » les effluents provenant de l'aérateur et chargés de boues d'épuration activés 3 formées de matières organiques dégradées par les bactéries d'activation.

Le clarificateur 2 est un décanteur, et son rôle est de séparer les boues activées 3 du reste des effluents activés pour permettre le relargage des eaux clarifiées 16 dans la nature.

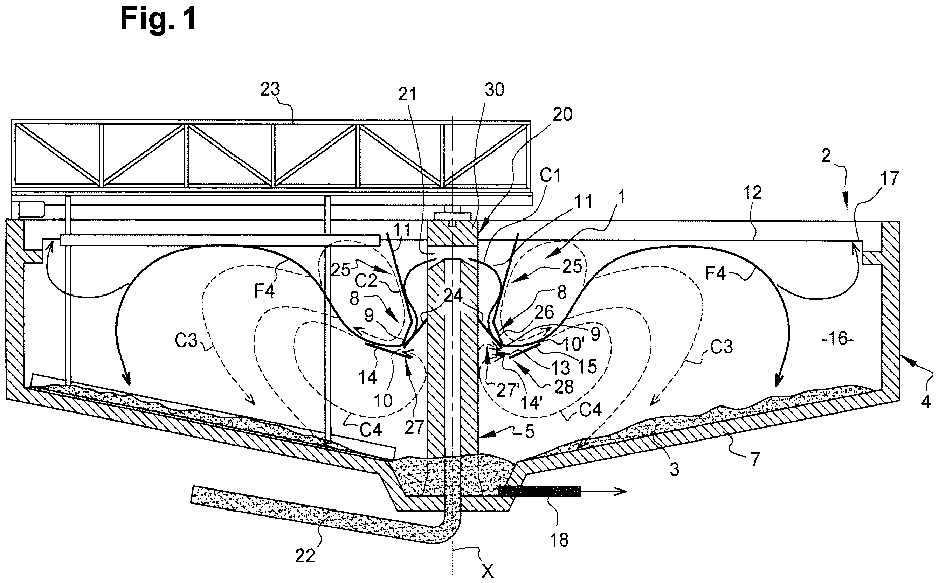

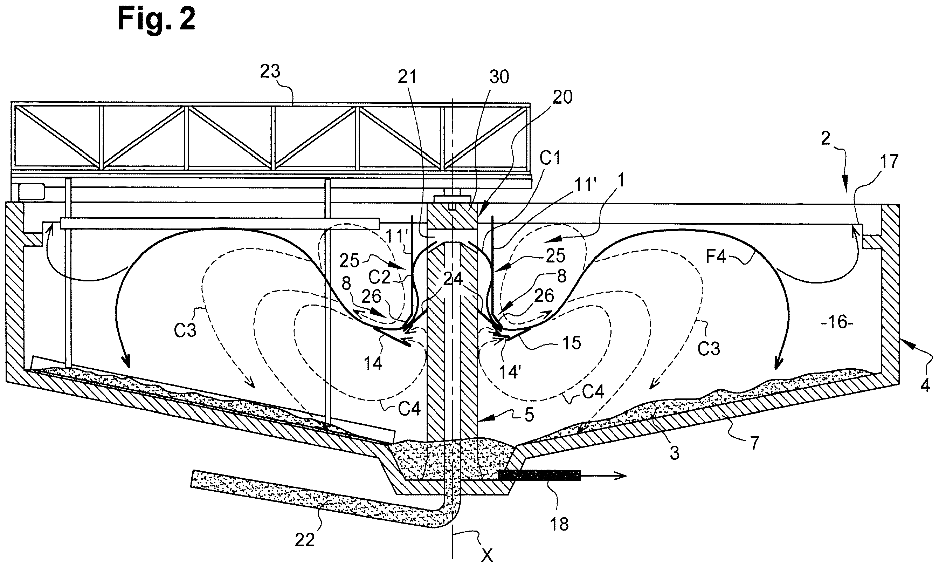

En référence aux figures 1 et 2, un clarificateur 2 comprend un bassin de stockage 4 d'effluents activés généralement de forme cylindrique, comportant une paroi de fond 7 sensiblement tronconique et un déversoir 17 ménagé au bord du bassin 4 sur toute sa périphérie pour permettre le déversement par surverse de l'eau clarifiée 16. La forme tronconique de la paroi de fond 7 est non limitative, et le clarificateur 2 peut dans certaines variantes comporter une paroi de fond 7 plane et perpendiculaire à la paroi cylindrique du bassin 4.

Le clarificateur 2 comprend également un puits technique 5 se présentant sous la forme d'une colonne s'étendant perpendiculairement depuis le fond 7 du bassin 4, à l'intérieur de laquelle un tuyau 22 d'amenée des effluents activés provenant de l'aérateur s'étend. La colonne 5 est préférentiellement cylindrique et forme des moyens d'amenée des effluents activés. Une première extrémité de la colonne 5 est solidaire du fond 7 du bassin 4 tandis qu'une partie d'extrémité opposée comprend une sortie 20 d'effluents activés comportant une bouche annulaire 21 ménagée sous et à proximité de la surface 12 du bassin 4, pour assurer une distribution homogène et isotrope des effluents activés dans ledit bassin 4. En outre, l'extrémité libre de la colonne 5 est préférentiellement émergée du bassin 4.

Le clarificateur 2 comprend également un pont racleur 23 fixé à l'extrémité libre de la colonne et adapté pour être entrainé à rotation afin de racler le fond 7 du bassin 4. Le pont racleur 23 a ainsi pour fonction de racler les boues 3 sédimentées au fond 7 du bassin 4 pour les ramener vers le centre dudit bassin 4. Le clarificateur 2 comprend enfin un tuyau d'évacuation 18 des boues activées 3 débouchant au centre du bassin 4.

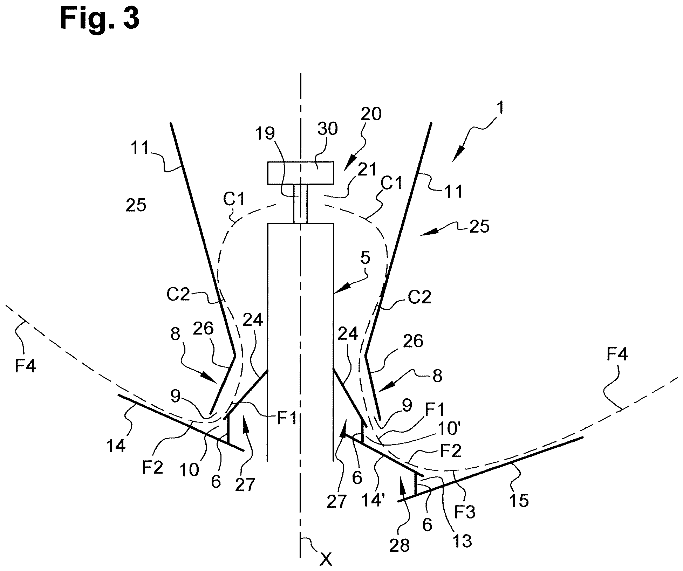

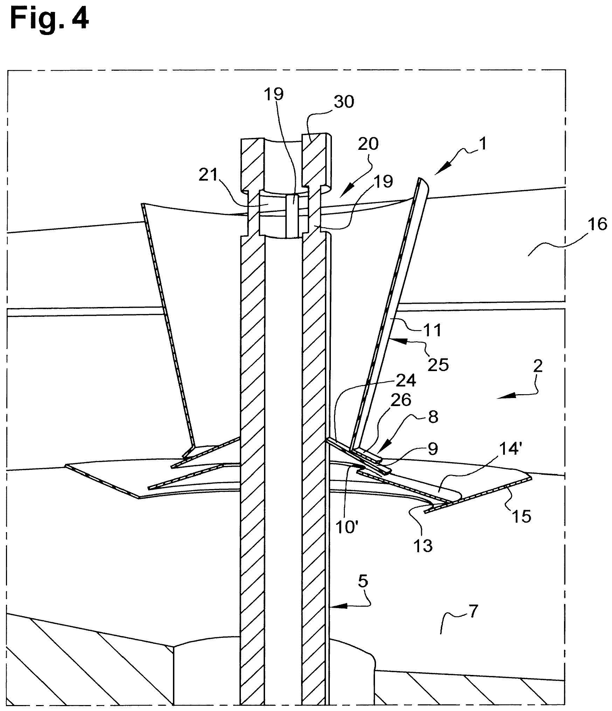

Selon l'invention et en référence aux figures 3 et 4, la sortie 20 d'effluents activés comprend quatre éléments de renfort 19 uniformément répartis et s'étendant au travers de la bouche 21 selon une direction perpendiculaire à la colonne 5 d'amenée d'effluents activés, et supportant un plateau 30 de la colonne 5 dont la face supérieure forme l'extrémité de ladite colonne 5. Ces éléments de renfort 19, préférentiellement cylindriques, permettent de supporter le pont racleur 23 relié au plateau 30, tandis que la disposition desdits éléments de renfort 19 n'influe ni sur l'homogénéité ni sur l'isotropie de la répartition des effluents activés dans le bassin 4.

Enfin et selon l'invention, le clarificateur 2 comprend un système de recirculation 1 des effluents activés et de décantation des boues activées 3. Le système de recirculation 1 est ménagé au moins en partie sous la surface 12 du bassin 4 clarificateur 2 autour de la colonne formant puits technique 5, le système de recirculation 1 et la colonne 5 étant coaxiaux.

En référence aux figures 1 à 4, le système de recirculation 1 selon l'invention va maintenant être décrit.

Le système de recirculation 1 comprend des moyens de guidage orienté 11, 11' du courant C1 d'effluents sortant de la colonne technique 5, lesquels moyens de guidage 11, 11' sont ménagés de manière coaxiale autour de ladite colonne technique 5.

Le système de recirculation 1 comprend en outre des moyens de concentration 8, 24, 26 du courant orienté C2 d'effluents provenant de la sortie des moyens de guidage orienté 11, 11'. Les moyens de concentration 8, 24, 26 comprennent une première paroi 24, dite paroi interne, qui se présente sous la forme d'une jupe tronconique dont le bord périphérique interne est solidaire de la colonne 5 et qui s'étend de manière divergente depuis ce bord périphérique interne vers le fond 7 du bassin 4. Les moyens de concentration 8, 24, 26 comprennent également une jupe tronconique externe 26 disposée en vis-à-vis de la jupe interne 24. Cette jupe externe 26 est en outre ménagée coaxialement autour de la colonne technique 5, et est solidarisée à une extrémité du corps principal 11, 11'. La jupe externe 26 et le corps principal 11, 11' forment une seconde paroi 25, dite paroi externe.

En outre, l'extrémité libre opposée du corps principal 11, 11' affleure la surface 12 du bassin 4. Préférentiellement, l'extrémité libre du corps principal 11, 11' est émergée. Selon une première variante représentée sur les figures 1 et 3, le corps principal 11 est tronconique et s'étend de manière convergente depuis son extrémité libre vers le fond 7 du bassin 4. Selon une seconde variante représentée sur les figures 2 et 4, le corps principal 11' est cylindrique. Dans ces deux variantes, le corps principal 11, 11' entour la colonne technique 5 de manière coaxiale.

Enfin, les génératrices respectivement du corps principal 11, 11' et de la jupe externe 26 sont sécantes, si bien qu'une fois installée autour de la colonne 5, la jupe externe 26 s'étend de manière divergente depuis son bord de jonction avec le corps principal 11, 11' vers le fond 7 du bassin 4.

Les jupes respectivement interne 24 et externe 26 sont solidarisées entre elles par des éléments de liaison 6 qui assurent le maintien à distance des deux jupes 24, 26 l'une par rapport à l'autre pour ménager un espace entre les deux jupes et une ouverture formant la sortie 9 des moyens de concentration 8, 24, 26. Les éléments de liaison 6 sont par exemple des plaques dont deux bords opposés sont respectivement solidarisés à la face supérieure de la jupe externe 26 et à la face inférieure de la jupe interne 24.

Dans la suite de la description, le terme « inférieur » est utilisé pour toute face orientée vers le fond 7 du bassin 4, tandis que le terme « supérieur » est utilisé pour toute face orientée vers la surface 12 du bassin 4.

L'espace de concentration annulaire formé entre les deux jupes 24, 26 présente en section radiale une forme tronconique qui s'étend de manière convergente vers la sortie 9 des moyens de concentration 8, 24, 26, laquelle sortie 9 est de forme annulaire et délimitée par les bords libres des deux jupes 24, 26. L'ensemble des deux jupes interne 24 et externe 26 reliées entre elles forment ainsi les moyens de concentration 8, 24, 26 du système de recirculation 1, dont la fonction sera décrite ci-après.

Le système de recirculation 1 comprend également des moyens d'accélération et des moyens de déflection 14, 15 du flux d'effluents activés qui vont être décrits selon deux modes de réalisation distincts.

En référence aux figures 1 à 3 et selon un premier mode de réalisation, le système de recirculation 1 comprend une jupe tronconique 14 dite jupe d'accélération et de déflection.

Les figures 1 à 3 représentent chacune une vue en coupe radiale d'un clarificateur comprenant un système de recirculation 1 selon l'invention. Sur la partie gauche des figures 1 à 3, le premier mode de réalisation du système est représenté, tandis que sur la partie droite de ces figures 1 à 3, c'est le second mode de réalisation du système de recirculation qui est représenté. Sur chaque figure, les deux modes de réalisation sont séparés par un axe X confondu avec la directrice de la colonne 5.

Cette jupe d'accélération et de déflection 14 est ménagée de manière coaxiale autour de la colonne technique 5, et est solidarisée à la jupe interne 24 des moyens de concentration 8 par des éléments de liaison 6 tels que ceux décrits ci-dessus : deux bords opposés de chaque élément de liaison 6 sont respectivement solidaires d'une face inférieure de la jupe interne 24 et d'une face supérieure de la jupe d'accélération et de déflection 14.

Ces éléments de liaison maintiennent lesdites jupes 14, 24 à distance l'une de l'autre pour former un espace d'accélération annulaire 27 délimité par la face inférieure de la jupe interne 24 et la face supérieure de la jupe d'accélération et de déflection 14, lequel espace d'accélération 27 présente en section radiale une forme tronconique qui converge vers une ouverture d'accélération annulaire 10 délimitée par la face supérieure de la jupe d'accélération et de déflection 14 et par le bord libre de la jupe interne 24.

En outre, la jupe d'accélération et de déflection 14 s'étend de manière divergente vers la surface 12 du bassin 4, et sa fonction sera précisée plus loin dans la description.

Dans ce mode de réalisation, l'agencement relatif de la jupe interne 24 et de la jupe d'accélération et de déflection 14, créant ainsi l'espace annulaire 27 convergeant vers la sortie annulaire 10, forme les premiers moyens d'accélération du système de recirculation 1. Par ailleurs, la configuration divergente de la jupe tronconique 14 en direction de la surface 12 du bassin forme les moyens de déflection dudit système de recirculation 1.

Un procédé de recirculation des effluents activés et de décantation des boues activées 3, mis en œuvre par le système de recirculation 1 selon le premier mode de réalisation, va maintenant être décrit.

Les effluents activés sont amenés via le tuyau d'amenée 22 relié à l'activateur et débouchant dans la colonne technique 5, puis se déversent dans le bassin 4 par la bouche d'amenée 21 ménagée au niveau de la sortie 20 de ladite colonne 5. Les effluents activés arrivent donc entre la colonne 5 et la partie supérieure de la paroi externe 25 formant les moyens de guidage, c'est-à-dire dans le corps principal 11, 11' dont la fonction est de rediriger le courant d'effluents C1 vers le bas, c'est-à-dire en direction du fond 7 du bassin 4, pour générer un courant orienté C2 d'effluents. Dans la suite de la description, un courant ou un flux est dit dirigé vers le bas lorsque ce dernier sera orienté vers le fond 7 du bassin 4, tandis qu'un courant ou un flux est dirigé vers le haut lorsque ce dernier est orienté vers la surface 12 du bassin 4.

Le courant d'effluents orienté C2 dans le corps principal 11, 11' se dirige donc vers les moyens de concentration 8, 24, 26 du système de recirculation 1. Ces moyens de concentration 8, 24, 26, dont la section diminue progressivement jusqu'à leur sortie 9, a pour rôle de concentrer le courant d'effluents C2 si bien que le flux d'effluents F1 obtenu en sortie 9 est rendu laminaire par lesdits moyens de concentration 8, 24, 26.

Un flux est dit laminaire lorsque l'ensemble des lignes de courant du flux s'écoulent dans la même direction. Corolairement, un tel flux laminaire est dépourvu de turbulences et de tourbillons qui iraient à l'encontre des processus de décantation des boues activées 3.

En sortie 9 des moyens de concentration 8, 24, 26, le flux laminaire d'effluents F1 se dirigeant vers la surface supérieure de la jupe d'accélération et de déflection 14 est réorienté par ladite jupe 14 vers la surface 12 du bassin 4. Le flux laminaire défléchi F4 se dirige ainsi vers la surface 12 et vers l'extérieur du bassin 4. A mesure que le flux F4 se rapproche des bords latéraux du bassin 12, celui-ci est redirigé vers le fond 7 du bassin 4 et provoque la sédimentation des boues 3 au fond 7. Par ailleurs, des contre-courants centripètes C3 générés dans le décanteur 2 sont également redirigés en direction du fond 7 du bassin 4 pour permettre la sédimentation des particules en suspension.

Une partie du flux défléchi F4 génère en outre des contre-courants C4 qui sont redirigés vers la colonne technique 5, recirculent dans l'espace d'accélération annulaire 27 et ressortent par l'ouverture annulaire 10 du système de recirculation 1.

Les contre-courants C4 pénétrant dans cet espace d'accélération annulaire 27 subissent également une dépression liée à l'effet Venturi, ce qui provoque l'agrégation des sédiments les plus fins présents dans les boues 3.

Le flux provenant de cet espace d'accélération 27 est accéléré par effet Venturi à une vitesse de l'ordre de 20 centimètres par seconde, et ressort par l'ouverture d'accélération annulaire 10 en accélérant le flux laminaire F1 sortant des moyens de concentration 8, 24, 26 et ainsi générant un flux laminaire accéléré F2. Ce flux accéléré F2 sera par la suite défléchi par la jupe 14 pour générer le flux défléchi F4.

Ces moyens d'accélération 14, 24 ; 10, 27 permettent ainsi d'une part d'augmenter la vitesse du flux de recirculation en particulier au voisinage de la surface 12 du bassin 4, ce qui a pour effet d'éviter l'accumulation de boues surnageantes et de faciliter par la suite la décantation au fond du bassin 4 des boues activées 3, et d'autre part de faciliter l'agglomération des boues 3 les plus fines, accélérant leur décantation au fond du bassin 4.

En outre, le flux accéléré F2 débouchant de la sortie d'accélération annulaire 10 permet d'éviter toute accumulation de boue 3 sur la face supérieure de la jupe d'accélération et de déflection 14, et permet donc de maintenir un flux d'effluents optimal dans le bassin 4.

En référence aux figures 1 à 4 et selon un second mode de réalisation, le système de recirculation 1 comprend une première jupe tronconique 14' dite jupe d'accélération et une seconde jupe tronconique 15 dite jupe de déflection.

La jupe d'accélération 14' est ménagée de manière coaxiale autour de la colonne technique 5, et est solidarisée à la jupe interne 24 des moyens de concentration 8, 24, 26 par des éléments de liaison 6 tels que ceux décrits ci-dessus : deux bords opposés de chaque élément de liaison sont respectivement solidaires d'une face inférieure de la jupe interne 24 et d'une face supérieure de la jupe d'accélération 14'.

Ces éléments de liaison maintiennent lesdites jupes 14', 24 à distance l'une de l'autre pour former un premier espace d'accélération annulaire 27' délimité par la face inférieure de la jupe interne 24 et la face supérieure de la jupe d'accélération 14', lequel premier espace d'accélération 27' présente en section radiale une forme tronconique qui converge vers une première ouverture d'accélération annulaire 10' délimitée par la face supérieure de la jupe d'accélération 14' et par le bord libre de la jupe interne 24.

La jupe de déflection 15 est également ménagée de manière coaxiale autour de la colonne technique 5, et est solidarisée à la jupe d'accélération 14' par des éléments de liaison tels que ceux décrits ci-dessus : deux bords opposés de chaque élément de liaison sont respectivement solidaires d'une face inférieure de la jupe d'accélération 14' et d'une face supérieure de la jupe de déflection 15.

Ces éléments de liaison maintiennent lesdites jupes 14', 15 à distance l'une de l'autre pour former un second espace d'accélération annulaire 28 délimité par la face inférieure de la jupe d'accélération 14' et la face supérieure de la jupe de déflection 15, lequel second espace d'accélération 28 présente en section radiale une forme tronconique qui converge vers une seconde ouverture d'accélération annulaire 13 délimitée par la face supérieure de la jupe de déflection 15 et par le bord libre de la jupe d'accélération 14'.

Dans ce mode de réalisation, l'agencement relatif de la jupe d'accélération 14' et de la paroi interne 24, créant ainsi l'espace annulaire 27' convergeant vers la sortie annulaire 10', forment les premiers moyens d'accélération du système de recirculation 1. Par ailleurs, l'agencement relatif de la jupe de déflection 15 et de la jupe d'accélération 14', créant ainsi l'espace annulaire 28 convergeant vers la sortie annulaire 13, forment les seconds moyens d'accélération du système de recirculation 1.

En outre, la jupe d'accélération 14' s'étend de manière divergente vers le fond 7 du bassin 4, tandis que la jupe de déflection 15 s'étend de manière divergente vers la surface 12 du bassin 4 pour générer le flux défléchi F4 en direction de la surface 12 du bassin 4.

Un procédé de recirculation des effluents activés et de décantation des boues activées 3, mis en oeuvre par le système de recirculation 1 selon le second mode de réalisation, va maintenant être décrit.

Les effluents activés sont amenés à une vitesse de l'ordre de 20 centimètres par seconde via le tuyau d'amenée 22 relié à l'activateur et débouchant dans la colonne technique 5, puis se déversent dans le bassin 4 par la bouche d'amenée 21 ménagée au niveau de la sortie 20 de ladite colonne 5. Les effluents activés arrivent donc entre la colonne 5 et la partie supérieure de la paroi externe 25 formant les moyens de guidage, c'est-à-dire dans le corps principal 11, 11' dont la fonction est de rediriger le courant d'effluents C1 vers le bas pour générer le courant orienté C2 d'effluents.

Le courant d'effluents orienté C2 dans le corps principal 11, 11' se dirige donc vers les moyens de concentration 8, 24, 26 qui vont concentrer le courant d'effluents C2 pour générer en sortie 9 le flux laminaire d'effluents F1.

En sortie 9 des moyens de concentration 8, 24, 26, le flux laminaire d'effluents F1 s'écoulant sur la surface supérieure de la jupe d'accélération 14' puis sur la surface supérieure de la jupe de déflection 15 est réorienté par ladite jupe de déflection 15 vers la surface 12 du bassin 4. Le flux défléchi F4 se dirige ainsi vers la surface 12 et vers l'extérieur du bassin 4. A mesure que le flux F4 se rapproche des bords du bassin 4, celui-ci est redirigé vers le fond 7 du bassin 4 et provoque la sédimentation des boues 3 au fond 7. Par ailleurs, des contre-courants centripètes C3 générés dans le décanteur 2 sont également redirigés en direction du fond 7 du bassin 4 pour permettre la sédimentation des particules en suspension.

Une partie du flux défléchi F4 génère en outre des contre-courants C4 qui sont redirigés vers la colonne technique 5 puis recircule vers les premier et second espaces d'accélération annulaires 27', 28 du système de recirculation 1.

Une première partie des contre-courants C4 recircule dans le système 1 de l'invention par le premier espace annulaire 27' et la première ouverture annulaire 10', tandis qu'une seconde partie des contre-courants C4 recircule dans le système 1 de l'invention par le second espace annulaire 28 et la seconde ouverture annulaire 13.

La première partie des contre-courants C4 est accélérée par effet Venturi et, en ressortant par la première ouverture annulaire 10', contribue à accélérer le flux laminaire F1 en sortie 9 des moyens de concentration 8, 24, 26 et ainsi générant le flux laminaire accéléré F2. En outre, la première des contre-courants C4 pénétrant dans cet espace d'accélération annulaire 27' subissent également une dépression liée à l'effet Venturi, ce qui provoque l'agrégation des sédiments les plus fins présents dans les boues 3.

D'autre part, la seconde partie des contre-courants C4 est également accélérée par effet Venturi et, en ressortant par la seconde ouverture annulaire 13, contribue à encore accélérer le flux laminaire d'effluents s'écoulant entre la face supérieure de la jupe d'accélération 14' et la face supérieure de la jupe de déflection 15, générant ainsi le flux laminaire secondairement accéléré F3. Le flux secondairement accéléré sera donc défléchi par la jupe 15 pour générer le flux défléchi F4. En outre, la seconde partie des contre-courants C4 pénétrant dans ce second espace d'accélération annulaire 28 subissent également une dépression liée à l'effet Venturi, ce qui provoque une seconde agrégation des sédiments les plus fins présents dans les boues 3.

Ces premiers moyens d'accélération 14', 24 ; 10', 27' permettent ainsi d'une part d'augmenter la vitesse du flux de recirculation en particulier au voisinage de la surface 12 du bassin 4, ce qui a pour effet d'éviter la présence de boues surnageantes et de faciliter par la suite la décantation au fond 7 du bassin 4 des boues activées 3, et d'autre part de faciliter l'agglomération des boues 3 les plus fines, accélérant leur décantation au fond du bassin 4.

En outre les seconds moyens d'accélération 14', 15 ; 28, 13, en plus d'augmenter encore la vitesse de recirculation du flux au voisinage de la surface 12 du bassin 4, éliminant ainsi complètement le risque de boues surnageantes, permettent d'éviter toute accumulation de boues activées 3 sur la face supérieure de la jupe de déflection 15, et permet donc de maintenir un flux d'effluents optimal dans le bassin 4. Ces seconds moyens d'accélération 14', 15 ; 28, 13 accélèrent encore la vitesse de décantation des boues, en augmentant encore l'efficacité d'agglomération des boues 3 les plus fines.

Enfin, le système de recirculation 1 de l'invention augmente la vitesse de décantation des boues activées 3 et permet leur récupération avant la lyse des bactéries présentes dans ces boues 3. De la sorte, tout relargage dans l'eau clarifiée 16 des polluants capturés par les bactéries et qui résulterait de la destruction de la paroi cellulaire desdites bactéries est évité.

Le système de recirculation 1 de l'invention est décrit en lien avec un clarificateur 2 d'une station d'épuration pour décanter les boues d'épuration des effluents activés, mais il est entendu que ce système de recirculation 1 est adaptable à tout type de décanteur dont la fonction est de décanter des effluents pour séparer les sédiments ou boues en suspension dans la phase liquide desdits effluents.

Par ailleurs, les matériaux constituant les différentes parties du système de recirculation 1 de l'invention peuvent être adaptés en fonction de l'application. A titre d'exemples non limitatifs, le système de recirculation 1 peut être réalisé en polyéthylène haute densité (PEHD) pour des effluents dont la température n'excède pas 40 degrés Celsius, ou en encore en acier inoxydable si les effluents sont plus chauds, par exemple à 90 degrés Celsius.

## Revendications

1. Système de recirculation (1) pour un décanteur (2), lequel décanteur (2) comprend un bassin (4) et des moyens d'amenée (5) dans le bassin (4) d'effluents chargés de boues en suspension (3), lesquels moyens d'amenée (5) comprennent une sortie (20) d'effluents sous et à proximité de la surface (12) du bassin (4), **caractérisé en ce que** le système de recirculation (1) comprend ;
• Des moyens de guidage orienté (11, 11') du courant (C1) d'effluents chargés de boues (3) depuis la sortie (20) des moyens d'amenée (5) en direction du fond (7) du bassin (4) ;
• Des moyens de concentration (8, 24, 26) du courant orienté (C2) d'effluents ménagés en sortie des moyens de guidage (11, 11') pour générer un flux laminaire d'effluents (F1) ;
• Des premiers moyens d'accélération (27,10, 14, 24 ; 27',10',14', 24) du flux laminaire (F1) qui sont adjacents à une sortie (9) des moyens de concentration (8, 24, 26), et
• Des moyens de déflection (14, 15) du flux accéléré (F2) vers la surface (12) du bassin (4) du décanteur (2) pour générer un flux défléchi (F4).

2. Système (1) selon la revendication précédente, **caractérisé en ce que** les moyens de concentration (8, 24, 26) comprennent une jupe tronconique interne (24) adaptée pour être agencée autour des moyens d'amenée (5) d'effluents, et une jupe tronconique externe (26) solidaire des moyens de guidage (11, 11'), lesquelles jupes interne (24) et externe (26) ménagent un espace de concentration annulaire présentant en section radiale une forme tronconique qui s'étend de manière convergente vers la sortie (9) desdits moyens de concentration (8, 24, 26).

3. Système (1) selon la revendication précédente, **caractérisé en ce que** les premiers moyens d'accélération comprennent une première jupe tronconique (14, 14') adaptée pour être agencée autour des moyens d'amenée (5) d'effluents, laquelle première jupe tronconique (14, 14') est disposée en sortie des moyens de concentration (8, 24, 26) en ménageant un premier espace annulaire (27, 27') qui est délimité par ladite première jupe tronconique (14, 14') et la jupe tronconique interne (24) des moyens de concentration (8, 24, 26), lequel premier espace annulaire (27, 27') présente en section radiale une forme convergente jusqu'à une première ouverture annulaire (10, 10').

4. Système (1) selon la revendication précédente, **caractérisé en ce que** les moyens de déflection comprennent la première jupe tronconique (14) qui s'étend de manière divergente en direction de la surface (12) du bassin (4) du décanteur (2) pour défléchir le flux accéléré (F2) vers ladite surface (12).

5. Système (1) selon l'une quelconque des revendications précédentes, **caractérisé en ce qu'**il comprend des deuxièmes moyens d'accélération (14', 15) du flux accéléré (F2) ménagés entre les premiers moyens d'accélération (14', 24) et les moyens de déflection (15) pour générer un flux secondairement accéléré (F3).

6. Système (1) selon la revendication précédente, **caractérisé en ce que** les seconds moyens d'accélération comprennent une seconde jupe tronconique (15) qui est adaptée pour être agencée autour des moyens d'amenée (5) d'effluents et disposée à distance de la première jupe tronconique (14') en ménageant un second espace annulaire (28) qui est délimité par la première jupe tronconique (14') et la seconde jupe tronconique (15) et qui présente en section radiale une forme convergente jusqu'à une seconde ouverture annulaire (13).

7. Système (1) selon la revendication 3 ou 6, **caractérisé en ce que** la première jupe tronconique (14') s'étend de manière divergente en direction du fond (7) du bassin (4) du décanteur (2), et en ce les moyens de déflection du flux laminaire (F3) comprennent la seconde jupe tronconique (15) qui s'étend de manière divergente en direction de la surface (12) du bassin (4) pour défléchir le flux secondairement accéléré (F3) vers ladite surface (12).

8. Système (1) selon l'une quelconque des revendications précédentes, **caractérisé en ce que** les moyens de concentration (8, 24, 26) présentent en section transversale une forme de tronc de cône qui s'étend de manière divergente depuis leur sortie (9).

9. Système (1) selon l'une quelconque des revendications précédentes, **caractérisé en ce que** les moyens de guidage (11) comprennent un corps de forme tronconique s'étendant de manière divergente depuis les moyens de concentration (8, 24, 26).

10. Système selon l'une quelconque des revendications 1 à 8, **caractérisé en ce que** les moyens de guidage (11') comprennent un corps de forme cylindrique s'étendant depuis les moyens de concentration (8, 24, 26).

11. Décanteur (2) du type clarificateur pour une station d'épuration comprenant un bassin de stockage (4) d'effluents chargés de boues (3), notamment de boues d'épuration activées (3), comprenant des moyens d'amenée (5) d'effluents comportant une sortie (20) d'effluents sous et à proximité de la surface (12) du bassin (4), lequel décanteur (2) comprend en outre un système de recirculation (1) ménagé autour des moyens d'amenée (5) et comprenant :
• Des moyens de guidage orienté (11, 11') du courant (C1) d'effluents chargés de boues (3) depuis la sortie (20) des moyens d'amenée (5) en direction du fond (7) du bassin (4) ;
• Des moyens de concentration (8, 24, 26) du courant orienté (C2) d'effluents ménagés en sortie des moyens de guidage (11, 11') pour générer un flux laminaire d'effluents (F1) ;
• Des premiers moyens d'accélération (14, 24 ; 14', 24) du flux laminaire (F1) qui sont adjacents à une sortie (9) des moyens de concentration (8, 24, 26), et
• Des moyens de déflection (14, 15) du flux accéléré (F2) vers la surface (12) du bassin (4) du décanteur (2) pour générer un flux défléchi (F4).

12. Décanteur (2) selon la revendication précédente, **caractérisé en ce que** les moyens d'amenée (5) d'effluents forment une colonne s'étendant perpendiculairement depuis le fond (7) du bassin (4) et comprenant au niveau d'une portion d'extrémité libre la sortie (20) d'effluents ménagée sous et à proximité de la surface (12) du bassin (4), **en ce que** la sortie d'effluents (20) comprend une bouche (21) de forme annulaire pour évacuer les effluents dans toutes les directions, **en ce que** la colonne d'amenée (5) et le système de recirculation (1) sont coaxiaux, **en ce que** la sortie (20) d'effluents comprend une pluralité d'éléments de renfort (19) uniformément répartis, et **en ce que** chaque élément de renfort (19) s'étend en travers de la bouche (21) parallèlement à la colonne d'amenée d'effluents (19).

13. Décanteur (2) selon la revendication précédente, **caractérisé en ce que** la sortie (20) d'effluents comprend quatre éléments de renfort (19).

14. Procédé de recirculation d'effluents chargés de boues (3) dans un décanteur (2), notamment un clarificateur (2) pour une station d'épuration, comprenant un bassin de stockage (4) d'effluents chargés de boues (3), des moyens d'amenée (5) d'effluents comportant une sortie (20) d'effluents sous et à proximité de la surface (12) du bassin (4), lequel décanteur (2) comprend en outre un système de recirculation (1) ménagé autour des moyens d'amenée (5) et comprenant des moyens de guidage orienté (11, 11') du courant (C1) d'effluents chargés de boues (3) depuis la sortie (20) des moyens d'amenée (5) en direction du fond (7) du bassin (4), des moyens de concentration (8, 24, 26) du courant orienté (C2) d'effluents ménagés en sortie des moyens de guidage (11, 11') pour générer un flux laminaire d'effluents (F1), des premiers moyens d'accélération (14, 24 ; 14', 24) du flux laminaire (F1) qui sont adjacents à une sortie (9) des moyens de concentration (8, 24, 26), et des moyens de déflection (14, 15) du flux accéléré (F2) vers la surface (12) du bassin (4) du décanteur (2), lequel procédé comprend les étapes successives de :
• Guidage orienté du courant (C1) d'effluents depuis la sortie des moyens d'amenée (5) en direction du fond (7) du bassin (4) pour former un courant orienté (C2) ;
• Génération d'un flux laminaire (F1) d'effluents par concentration du courant orienté (C2) d'effluents en sortie des moyens de concentration (8, 24, 26) ;
• Première accélération du flux laminaire (F1) en sortie (9) des moyens de concentration (8, 24, 26), et
• Déflection du flux laminaire accéléré (F2) vers la surface (12) du bassin (4) pour générer un flux défléchi (F4).

15. Procédé de recirculation selon la revendication précédente, **caractérisé en ce qu'**il comprend une étape de seconde accélération du flux laminaire accéléré (F2) pour générer un flux secondairement accéléré (F3) préalablement à sa déflection vers la surface (12) du bassin (4).
